Europäisches Patentamt

European Patent Office

Office européen des brevets

(11) Publication number: **0 192 341**
**B1**

# EUROPEAN PATENT SPECIFICATION

(45) Date of publication of patent specification: **22.08.90**

(21) Application number: **86300460.2**

(22) Date of filing: **23.01.86**

(51) Int. Cl.⁵: **F 16 D 43/00,** F 16 D 41/00, F 16 D 11/00

(54) Hub-clutch.

(30) Priority: **23.01.85 JP 7894/85**
**18.02.85 JP 21448/85**
**11.05.85 JP 69821/85**

(43) Date of publication of application:
**27.08.86 Bulletin 86/35**

(45) Publication of the grant of the patent:
**22.08.90 Bulletin 90/34**

(84) Designated Contracting States:
**DE FR GB**

(56) References cited:
**GB-A-2 012 379**
**GB-A-2 045 366**
**GB-A-2 055 998**
**GB-A-2 084 670**
**US-A-4 269 294**
**US-A-4 327 821**
**US-A-4 382 495**

(73) Proprietor: **TOCHIGI-FUJI SANGYO KABUSHIKI KAISHA**
**2388 Omiya-cho**
**Tochigi-shi Tochigi-ken (JP)**

(72) Inventor: **Kurihara, Sakuo**
**2388, Omiya-cho**
**Tochigi-shi Tochigi-ken (JP)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

This invention relates to hub clutches, and more particularly to an automatic free wheel hub clutch.

An example of conventional automatic free wheel hub clutches (hereinafter referred to simply as "hub clutch") includes the one disclosed in U.S. Patent No. 4,327,821 which comprises clutching splines formed on the outside circumference of a driving shaft and being capable of movement in the axial direction to engage corresponding splines, a clutch ring engaged slidably movably with the spline on the inside circumference of a hub casing along the axial direction and having corresponding splines capable of being in clutched engagement with said clutching splines on the outside circumference of the driving shaft, a return spring urging a clutch ring stretchably provided between a clutch cap (covering member) and said clutch ring towards the inside in the axial direction (clutched off direction), a cam follower disposed adjacent to the inside of the clutch ring in the axial direction and engaging movably along the axial direction with the other spline on the outside circumference of said driving shaft, said cam follower having a plurality of V-shaped projections each projecting inwardly in the axial direction and having a protrusion (tooth) formed on the outside circumference of the extreme end of said V-shaped projection and protruding towards the outside diameter direction, a cam member provided with a V-shape grooved cam surface for matching it with the V-shaped projection of said cam follower to seat thereto on the outer circumference at the extreme axial end of the outside and secured to a stationary system (lock nut), a movable cam disposed coaxially on the outside diameter side of the cam member, being rotatable and having a cam surface of substantially V-shaped projection on the outside in the axial direction as well as a cam stop at the extreme end of said cam surface, and a drag shoe damping the movable cam with respect to the stationary system. A thrust washer is disposed at a sliding section defined between the axially inside surface of the drag shoe and the outside surface of the lock nut and which supports such urging force transmitted from the return spring through the clutch ring, the cam follower, the movable cam, and the drag shoe. On the inside diameter side of said return spring, a shift spring is coaxially disposed and which is stretchably provided between the clutch cap and the clutching spline. Said clutch ring is in face to face contact with the cam follower in slidable state.

In the above construction, when torque is transmitted from said other spline to the cam follower by commencement of rotation of the driving shaft, the V-shaped projection of the cam follower which has been fitted into the V-shape grooved cam surface of the cam member shifts to the outside in the axial direction along said V-shape grooved cam surface. When said V-shaped projection gets over said V-shaped groove, the projection at the extreme end engages, this time, with a V-shape protruding cam surface of the movable cam (rotation of which is suppressed by the drag shoe), and shifts towards the outside in the axial direction along the same. At the time when said projection gets over the V-shaped groove, the clutching spline on the outer circumference of the driving shaft has already been in clutched engagement with the clutch ring, and the locking state thereof becomes deeper with shift of the projection towards the outside in the axial direction along the projecting cam surface of the movable cam, and such locking state finishes when the projection engages with a cam stop. The drag shoe controls the movable cam so that such clutched engagement as described above can be maintained.

Furthermore all of said clutching splines and the other splines are adjacently disposed on the driving shaft to each other in axially movable condition, and the displacement of these splines towards the outside in the axial direction is elastically suppressed by means of the shift spring provided stretchably between the clutching splines (positioned outwardly along the axial direction) and said clutch cap.

In conventional hub clutches, however, when a clutch is engaged (in case of locking condition), urging force from a return spring is received by a thrust washer through a clutch ring, a cam follower, a movable cam, a drag shoe and the like. Hence the spring load in this case has no function and it results in waste of force. Furthermore wear or durability in an engaged portion where load is received thereby are affected, so that there is a risk of an accompanying decrease in performance. Besides, the drag shoe functions to maintain clutched engagement condition (one shoe before a projection of the cam follower engages with a cam stop after having engaged with a V-shape projecting cam of the movable cam), whilst such function itself for commencing clutched on-off operation is performed by a cam member being a stationary system. In other words, function for starting the clutched on-off operation and function for maintaining clutched on condition are shared between separate members so that members used increase and the construction therefor becomes complicated.

In addition, since a cam mechanism producing thrust force required for clutched engagement is constructed having cam surfaces sliding with each other, the brake section generating damping force for cams may require a high damping resistance so that there is a fear of decreasing durability. Alternatively, if the damping resistance is insufficient, clutching operation becomes unreliable.

Moreover, in conventional hub clutches, since the inside end surface of said clutch ring in the axial direction contacts slidably with the outside end surface of the cam follower, there is a risk of wear between the sliding surface of said clutch ring and said cam follower (sliding due to relative rotation between the members) by means of the load from the return spring and the shift spring in the case of ratcheting of the clutching spline and the clutch ring (such a state where both the end surfaces merely contact with each other and no meshing is observed) in the course of shifting to a locked state, and as a result there is a risk of reducing durability. More specifically, the clutching spline is urged by the cam follower towards the outside along the axial direction at the time of ratcheting, so that the clutching spline is displaced outwardly in the axial direction to compress the shift spring. Thus, in addition to the urging force from the return spring, the reaction force of the shift spring is applied to the contacting surface (sliding surface) of the clutch ring and the cam follower, so that wear of said sliding surface is accelerated as a synergistic effect of both the urging forces and the durability thereof decreases remarkably.

Further examples of hub clutches are shown in GB-A-2045366 and US 4269294. These disclosures both specify the provision of a clutch ring which is in splined engagement with the splines on the driving gear fixed to the outside circumference of an axle shaft. They are not in splined engagement with a spline on the casing. Such arrangements lead to further problems of wear and consequent reduced durability of the splines. This is enhanced because of the poor coaction of the splines. It is an object of the present invention to provide a hub clutch in which local sliding wear due to thrust from a return spring is prevented to eliminate loss of spring force and so that no reinforcement with respect to the locality becomes unnecessary. The construction of said hub clutch is simplified in such a manner that return spring force at the time of clutched engagement is utilised to obtain a resistance for maintaining the engagement.

A further object of the present invention is to provide a hub clutch wherein the cam portion is constructed by utilizing a rolling resistance in order to elevate durability of the brake surfaces between cams and to make clutching operation positive.

A still further object of the present invention is to provide a hub clutch wherein no return spring thrust is applied to the undermentioned sliding section in order to reduce wear in said sliding section formed by a member on the housing and a member on the driving shaft, thereby to improve durability.

According to the present invention, there is provided a hub clutch for selectively transmitting torque between an axle shaft extending in an axial direction and a wheel hub, said hub clutch comprising: a cylindrical casing secured to the wheel hub and having a spline extending along an inner surface thereof; a driving gear fixed to an end of the axial shaft within said casing, said driving gear having splines extending along an outer surface thereof; a first cam means in splined engagement with said driving gear and movable therealong in said axial direction, said first cam means having cam portions projecting toward an inner side of the hub clutch; a second non-rotatable cam adjacent said first cam and cooperating therewith, said second cam having a second cam grooved portion engaging said cam portions of said first cam means; a rotatable cam ring in a frictional braking relationship with said second cam and engaging said cam portions of said first cam means; a clutch ring; characterised in that said clutch ring is in splined engagement with said spline on said inner surface of said casing and movable in said axial direction between a first clutched position adjacent an outer side of the hub clutch at which the clutch ring operatively connects the splines of said driving gear and the spline of said casing for transmitting torque between the axle shaft to which said driving gear is fixed and the wheel hub to which said casing is fixed and a second unclutched position at which the clutch ring does not transmit torque between the axle shaft and the wheel hub; in that a shift spring is provided for urging said clutch ring toward said clutched position in said axial direction; in that a return spring is provided for urging said clutch ring toward said unclutched position; and in that the projecting cam portions of said first cam means extend in said second cam grooved portion and in said cam ring grooved portion when said cam ring is in said unclutched position and, when the axle shaft is rotated, said projecting cam portions of said first cam means are urged in said axial direction toward said outer side of the hub clutch by said respective grooved portions whereupon said projecting cam portions follow said second cam portions of said second cam and said first cam means is urged thereby further toward said outer side of the hub clutch for urging said clutch ring toward said clutch position which it attains under the influence of said shift spring and further displacement of said first cam means and said clutch ring toward the outer side of the hub clutch is terminated.

Embodiments of the invention will now be described, by way of example with reference to the accompanying drawings, in which:

FIGURE 1 is a sectional view of a first embodiment showing clutched off and on conditions;

FIGURES 2A and 2B are views illustrating engaged states of the respective cam portions in case of clutch off or on modes;

FIGURES 3A, 3B and FIGURES 4A, 4B illustrate engagement states of a projection of the driving gear and projection of the cam ring in case of clutched off or on mode, respectively;

FIGURES 5, 6 and 7 are schematic views each illustrating a modification of the first embodiment of the present invention;

FIGURES 8A, 8B to FIGURE 11, inclusive, illustrate the second embodiment of the present invention wherein;

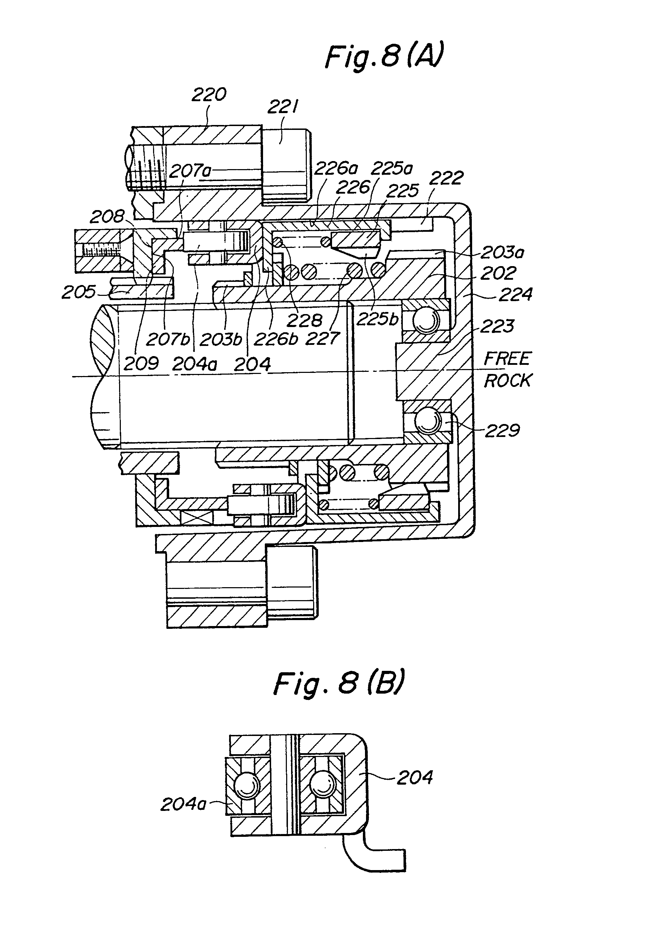

FIGURE 8A is a schematic longitudinal sectional view showing clutched off and on conditions;

FIGURE 8B is a sectional view showing a rolling cam;

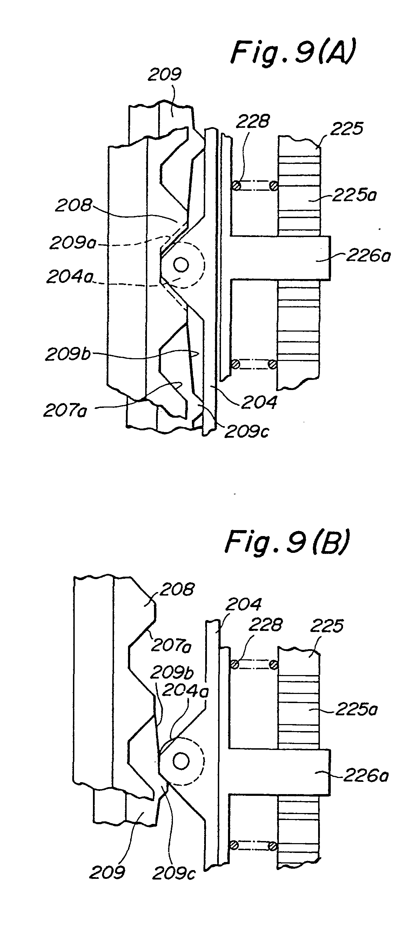

FIGURES 9A and 9B are schematic views illustrating engaged states of the respective cam portions in case of clutched off or on mode;

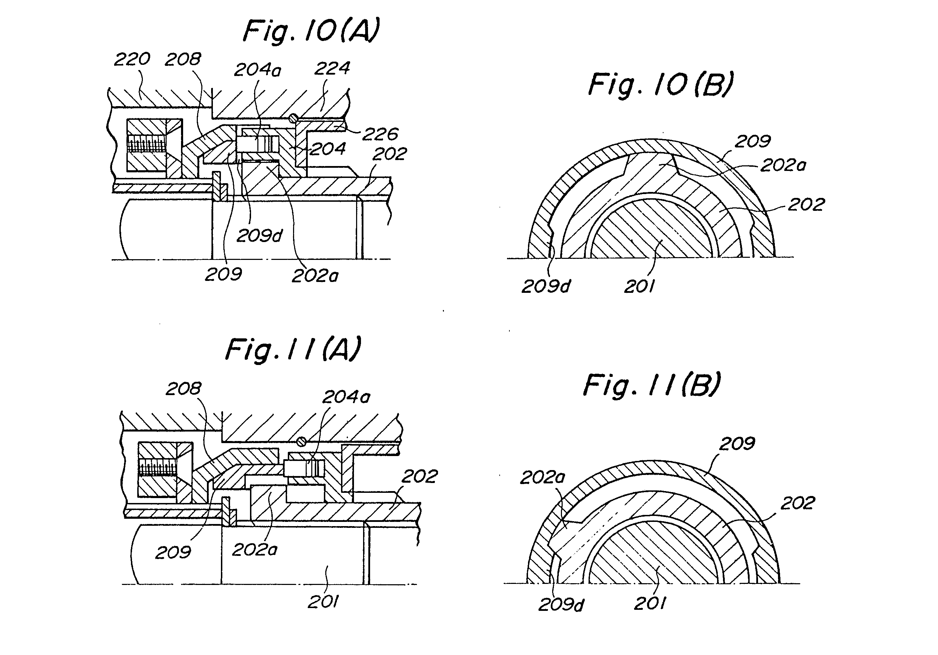

FIGURES 10A, 10B and FIGURES 11A, 11B are schematic views illustrating engaged states of a projection of the driving gear and a projection of the cam ring in case of clutched off or on mode, respectively;

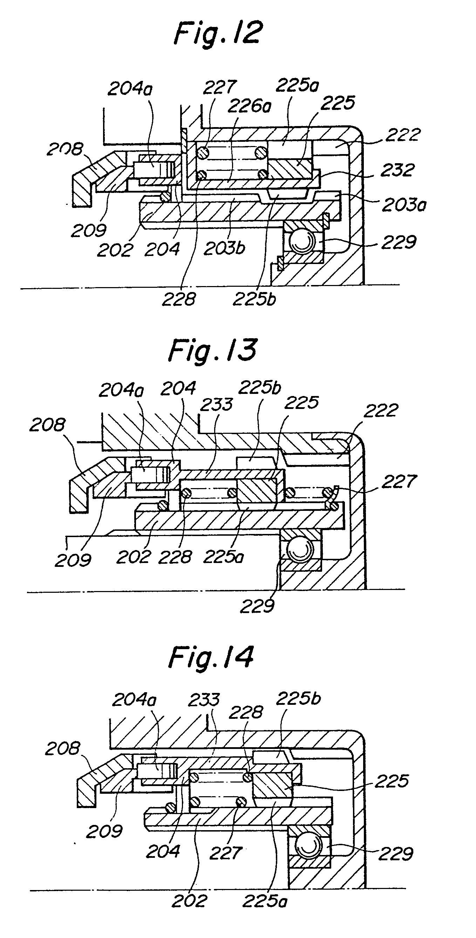

FIGURES 12, 13 and 14 are schematic views each illustrating a modification of the second embodiment of the present invention;

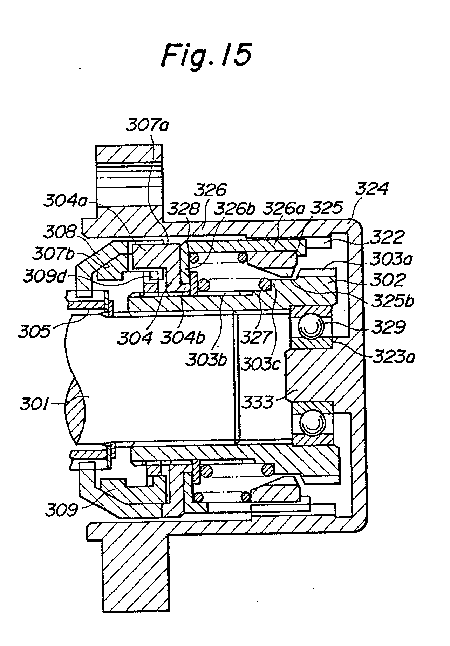

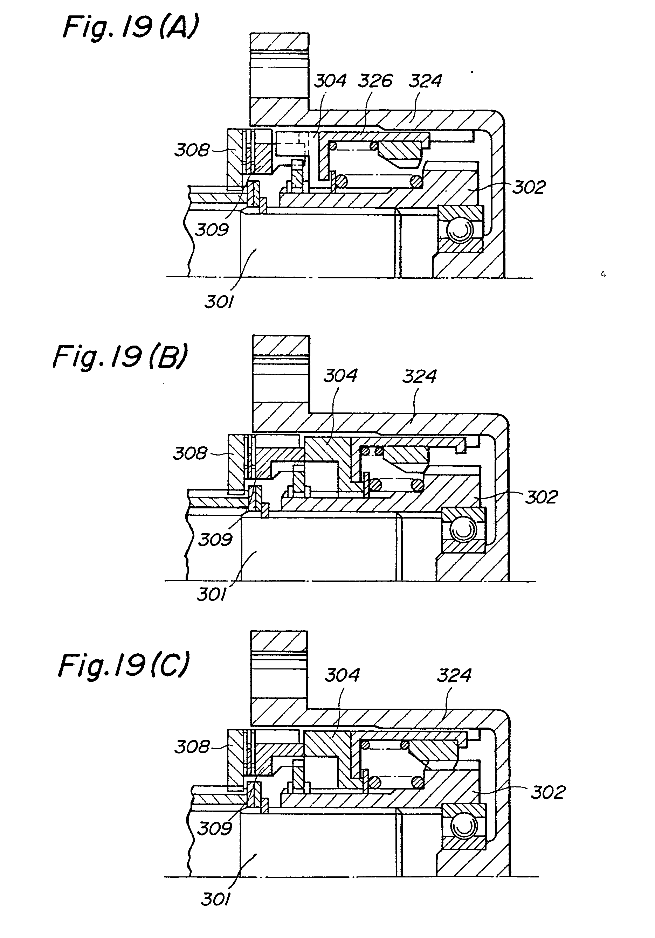

FIGURE 15 through FIGURES 19A, 19B and 19C, inclusive, illustrate the third embodiment of the present invention wherein;

FIGURE 15 is a schematic longitudinal sectional view of the embodiment, showing clutched off and on conditions;

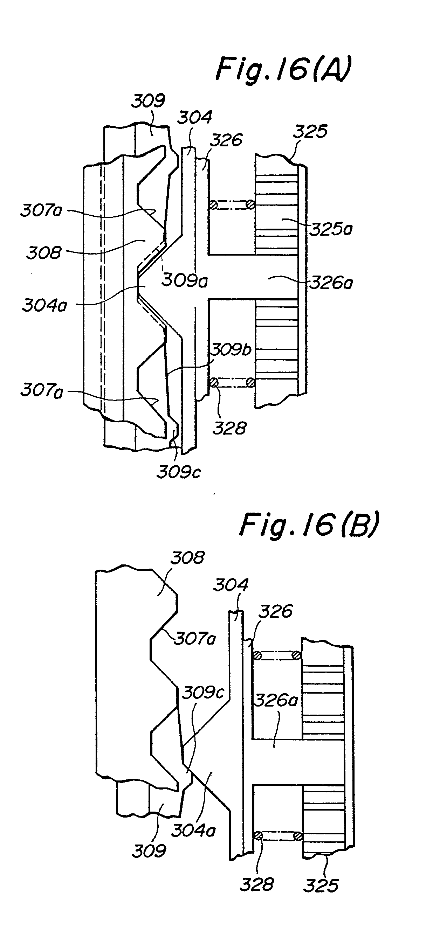

FIGURES 16A and 16B are views of engaged states of the respective cam portions in case of clutched off or on mode, respectively;

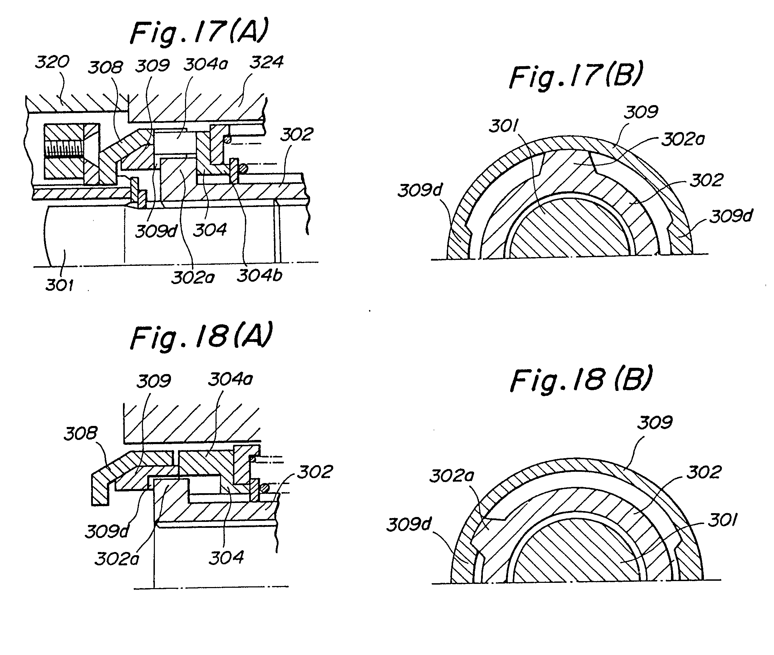

FIGURES 17A, 17B and FIGURES 18A, 18B are schematic views illustrating engaged states of a projection of the driving gear and a projection of the cam ring in case of clutched off or on mode, respectively, FIGURES 19A, 19B and 19C are schematic views illustrating clutched-off, ratcheting, and clutched-on modes, respectively; and

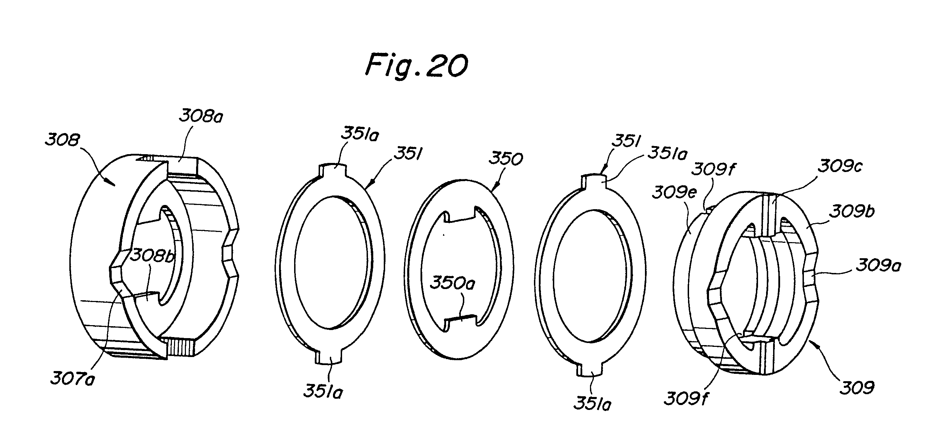

FIGURE 20 is a schematic perspective view showing the brake section of Figure 19.

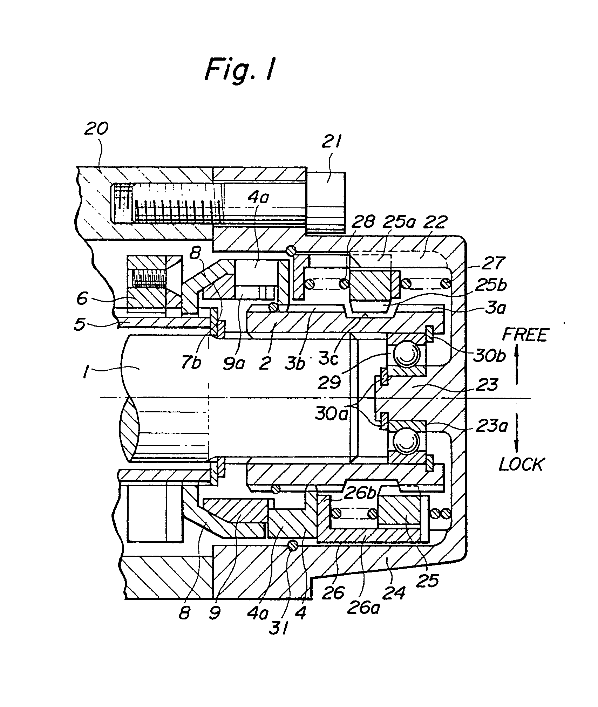

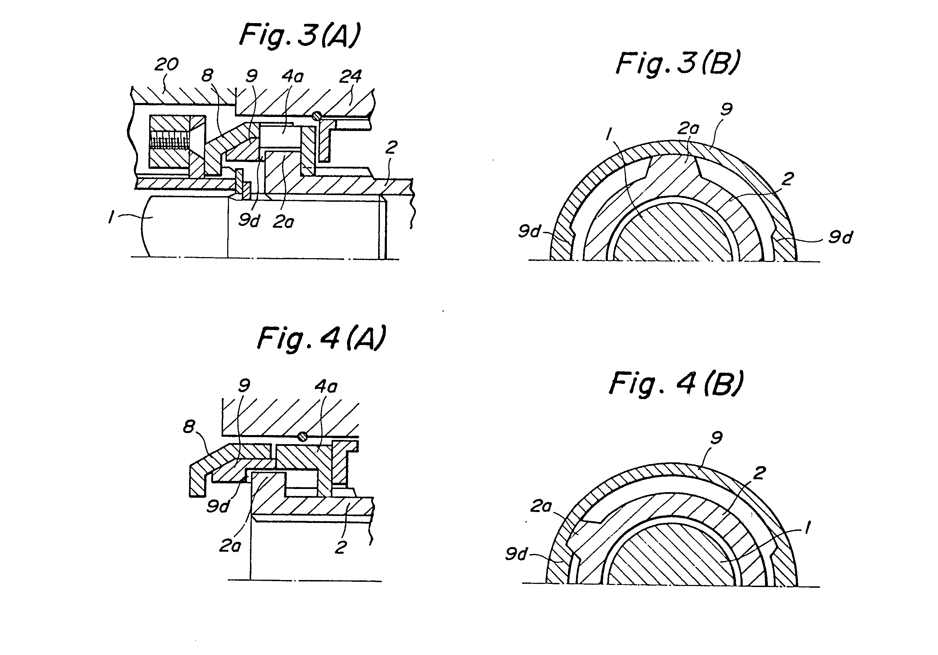

In an embodiment of the present invention shown in Figures 1, 2A, 2B, 3A and 3B, a hub clutch comprises a driving gear 2, a first cam (cam follower) 4, a second cam (stationary cam) 8, a cam ring (movable cam) 9, a casing 24, a clutch ring 25, a retainer 26, a return spring 27, and a shift spring 28. In the hub clutch, the driving gear 2 is fixedly splined to the outside surface of an axle shaft 1 at the outward end thereof and said driving gear has a non-spline portion 3c, and a first spline 3a and second spline 3b for locking the clutch at the outside surface thereof. The first cam 4 is in splined engagement with the second spline 3b such as to be axially movable and said first cam is provided with V-shaped projecting cam portions 4a at its axially inward edge. Rotation of the second cam 8 is prevented by means of a stationary system (comprising a spindle 5, a lock nut 6 and the like). Said second cam has a plurality of V-grooved cam portions 7a provided on its axially outward edge into which a thick portion on the circumference of each projection 4a of said first cam may fit, and has also a conical friction surface 7b on the radially inner face thereof. The cam ring 9 has a V-grooved first cam portion 9a, into the axially outward end of which the thick portion on the radially inner side of a cam projection 4a may fit, and also has a sequential pair comprising a second cam portion 9b and stopper 9c positioned to each side of the first cam portion 9a. Said cam ring further forms a brake surface generating required damping force due to sliding of the axially inward outer circumferential surface thereof against the friction surface 7b of the radially inner face of the second cam 8. The inside circumferential surface of the casing 24 is secured to a wheel hub 20 by a bolt 21 and possesses a spline 22. Furthermore said casing is provided with a projection 23 at the radially central portion of the inner surface of the outer end wall of the casing. The clutch ring 25 has splines 25a on its radially outer surface engaged movably with a spline 22 of the casing 24 along the axial direction thereof, as well as a spline 25b on the radially inner surface thereof engaging reversibly with the first spline 3a of the driving gear in clutching on-off action. The retainer 26 comprises a retainer arm 26a coaxial with the shaft 1 and a radially inwardly projecting portion 26b at the axially inward end of the arm 26a. Rotation of the retainer 26 is suppressed by means of the spline 22. The return spring 27 is stretchably provided between the inner surface of the axially outer end of the casing 24 and the axially outer surface of the clutch ring 25 thereby urging the clutch ring 25 axially inwards (i.e. in the clutching off direction). The shift spring 28 is stretchably provided between the inwardly projecting portion 26b of the retainer 26 and the axially inner edge of the clutch ring 25 thereby urging the clutch ring 25 axially outwardly (i.e. in the clutching on direction). The return spring 27 has stronger expanding force than that of the shift spring 28. The extreme (axially outer) end of the driving gear 2 projects from the extreme end of the axle shaft 1, and a bearing 29 is disposed between the inner periphery of the extreme end of the driving gear 2 and the projection 23 of the casing. The radially inner portion of the bearing 29 is locked by a stepped portion 23a of the projection 23 as well as a snap ring 30a, whilst the radially outer portion thereof is locked in the driving gear 2 by means of a snap ring 30b, whereby inward axial displacement of the bearing is prevented. Reference numeral 31 designates a snap ring restricting displacement of the retainer 26 in the axial direction. The upper half of Figure 1 illustrates clutched-off (two wheel drive) mode, whilst the lower half shows clutched-on (four wheel drive) mode. Figures 3A,3B and Figures 4A,4B show positional relationships between a projection 2a on the outer circumference of the driving gear and a projection 9d on the inner circumference of the cam ring 9 in free (clutched-off) and locked up (clutched-on) modes, respectively.

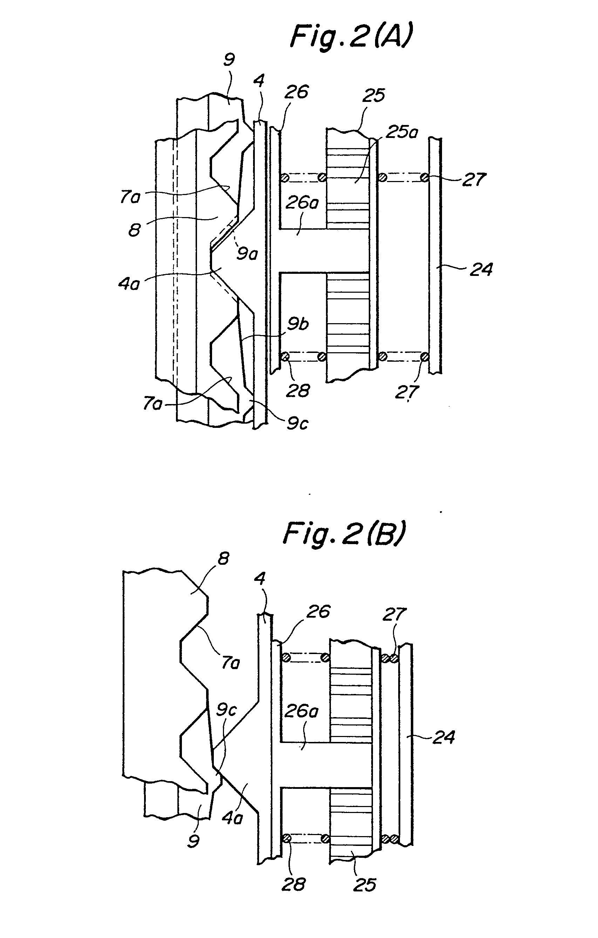

In the above construction, the operation for switching over the clutched-off mode (Figure 2A), shown in the part above the centre line in Figure 1, to the clutched-on mode (Figure 2B), shown in the part under the centre line, will be described hereinbelow.

First, when driving force from the engine is transmitted to the axle shaft 1, the driving gear 2 and the first cam 4 start their integral rotation. In the clutched-off mode, the cam portions 4a of the first cam 4 are simultaneously fitted in and engaged with the grooved cam portion 7a of the second cam 8 and the first cam portion 9a of the cam ring 9. When the first cam 4 commences to be rotated by rotation of the axle shaft 1, the cam portion 4a is displaced axially outwardly along the respective cam surfaces of the cam portions 7a and 9a in response to the axially outward thrust force generated at the respective cam surfaces. The cam portion 4a surmounts the grooved cam portions 7a and 9a, and runs on the second cam portion 9b of the cam ring. Then, the cam portion 4a is further displaced towards the outside in the axial direction along the second cam portion 9b, eventually abutting the stopper 9c to cease displacement in the axial direction. The relative rotation between the cam ring 9 and the first cam 4 in this case is due to resistance to motion of the cam ring 9 resulting from pressing of the cam ring 9 against the contact surface 7b of the second cam 8 in response to the reaction force of the return spring 27 acting through the first cam 4. When the return spring 27 is compressed due to shift of the first cam 4 axially outwardly the clutch ring 25 is consequently also displaced outwardly in the axial direction. The shift spring 28 ensures that the splines 25b completely mesh with the splines 3a (see the lower half of Figure 1 and Figure 2B). Thus, complete clutched on mode is attained, the projection 2a on the outside circumference of the driving gear engages with the projection 9d on the inside circumference of the cam ring 9 to rotate directly the cam ring 9, whereby rotational torque is transmitted.

Next, such case where four wheel drive mode is switched over to two wheel drive mode will be described hereinbelow.

After transmission of the driving force to the axle shaft 1 is shut off, the car is reversed slightly whereby the cam portion 4a of the first cam 4 is pushed away from the stopper 9c by means of expanding force of the return spring 27, and the cam portion 4a is displaced inwardly in the axial direction along the cam portion 9b, finally the cam portion 4a drops into the cam portion 7a of the second cam 8 and the cam portion 9a of the cam ring 9. Thus, the clutched-off mode is realised. In the course of displacement of the first cam 4 towards the inside along the axial direction, the spline 25b of the clutch ring 25 is released from meshing with the spline 3a to return within the non-spline portion 3c. The non-spline portion 3c is so adjusted as to possess such a width in the axial direction which does not obstruct rotation of the clutch ring 25 at the time of two wheel driving. Shift of the retainer 26 along the axial direction is restricted by the snap ring 31 so that the retainer is in a state of non-contact with the first cam 4. Since the spline 22 of the casing is used for only carrying slidably the clutch ring 25, there is no need for constructing such spline of material having high strength and heavy weight, such as steel and the like. Hence weight-saving can be attained by utilizing aluminum alloy or the like.

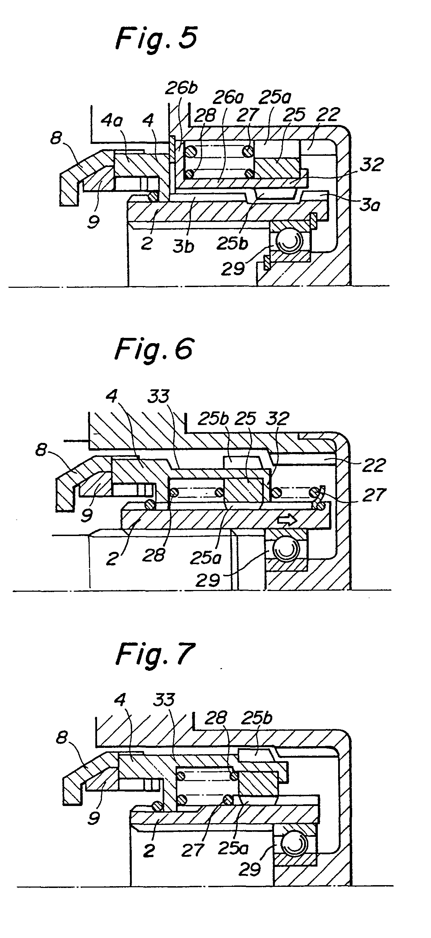

Figure 5 is a view showing a modification of the first embodiment according to the present invention wherein like reference characters designate like or corresponding parts in Figure 1 and the overlapping description thereof will be omitted.

The present modification differs from the first embodiment in that an arm 26a of the retainer 26 passes axially through clutch ring 25 and its extreme end forms a bent stopper 32. Additionally a radially outward projection 26b is formed at the axially inner end of the retainer and further a return spring 27 is stretchably provided in parallel with a shift spring 28 disposed between the clutch ring 25 and the axially outer face of the bent portion 26b.

Figure 6 illustrates the second modification of the first embodiment, according to the present invention, which differs from the embodiment and the modification described above in that a cam-retainer member 33 is integrally formed with a retainer and a first cam, in that the clutch ring 25 is constructed such that it is slidably engaged with the driving gear 2 to be clutched on-off with the spline 22 of the casing, and in that the return spring 27 is disposed between the extreme end of the driving gear 2 and a stopper 32 and is stretchably provided in series with a shift spring 28 disposed between the inner wall of the cam-retainer member 33 and the clutch ring 25. According to the construction as described above, since urging force is always applied to the driving gear by means of the return spring 27 in the direction of the illustrated arrow, no snap ring is required for preventing falling-off of bearing 29.

Figure 7 illustrates further another modification wherein the engagement of a cam-retainer member 33 with clutch ring 25 is the same as in said second modification, but the present modification differs therefrom in that a return spring 27 disposed between an inner end of a single spline of driving gear 2 and the cam retainer member 33 is stretchably provided in parallel with a shift spring 28 disposed between clutch ring 25 and the cam-retainer member 33.

In the present modification, snap rings for preventing falling-off of bearing 29 may also be omitted.

In brief, the above-mentioned embodiment and modifications are constructed such that when the axle shaft commences to be driven, the protruding cam portion of the first cam, which cam is axially movably splined to the outside circumference of the driving gear formed integrally with the axle shaft, is displaced axially outward from the respective grooved cam portions of both the second cam and the cam ring and thereafter displaced further to the outside in the axial direction along the second cam portion of the cam ring so that the clutch ring is displaced axially outward via intermediacy of the shift spring, whereby the casing is engaged integrally with the driving gear. As a mechanism for maintaining the clutch engagement (locked up state) in the above case, such members as mentioned above for receiving return spring load are provided for urging the cam ring 9 into contact with the second cam 8 of the stationary system to brake the cam ring 9, and at the same time the locked up state derived from said members is effectively utilised in the embodiment and the modifications. Thus, there is no need for an individual mechanism for maintaining return spring load, so that no power loss can be observed, the construction therefor can be simplified and the cost reduced.

The second embodiment of the present invention will now be described hereinbelow.

In the second embodiment of the present invention shown in Figures 8, 9A, 9B, 10A and 10B, a hub clutch comprises a driving gear 202, a moving body 204, a cam 208, a cam ring 209, a casing 224, a clutch ring 225, a retainer 226, a return spring 227, and a shift spring 228. In the hub clutch, the driving gear 202 is fixedly splined to the radially outer surface of an axle shaft 201 at the axially outer end thereof and said driving gear has a first spline 203a and a second spline 203b for locking the clutch at the outside surface thereof. The moving body 204 is in splined engagement with the spline 203b so as to be axially movable, and has therewithin a rolling body 204a. Rotation of the cam 208 is prevented by means of a stationary system (comprising a spindle 205, a lock nut and the like), and said cam has on its axially outward edge a plurality of V-grooved cam portions 207a into which a thick portion on the circumference of the rolling body 204a may fit, and said cam has also a friction surface 207b on the axially inner periphery thereof. The cam ring 209 has a V-grooved first cam portion 209a into the axially outer edge of which a thick portion on the radially inner side of the rolling body 204a may fit and also has a sequential pair comprising second cam portion 209b and stopper 209c positioned to each side of the first cam portion 209a. Said cam ring further forms a brake surface generating required damping force due to sliding of the axially inward outer circumferential surface thereof against the friction surface 207b of the radially inner face of the cam 208. The inside circumferential surface of the casing 224 is secured to a wheel hub 220 by a bolt 221 and possesses a spline 222. Furthermore said casing is provided with a projection 223 from the radially central portion of the inner surface of the outer end wall of the casing. The clutch ring 225 has splines 225a on its radially outer surface engaged movably with a spline 222 of the casing 224 along the axial direction thereof, as well as a spline 225b on the radially inner surface thereof engaging reversibly with the first spline 203a of the driving gear in clutching on-off action. The retainer 226 comprises a retainer arm 226a coaxial with the shaft 201 and a radially inwardly projecting portion 226b at the axially inward end of the arm 226a. Rotation of the retainer 226 is suppressed by means of the spline 222. The return spring 227 is stretchably provided between the protruding portion forming the first spline 203a and a spring engaging member with the second spline 203b of the driving gear 202 which axially inwardly abuts the arm 226a of the retainer 226 thereby urging the clutch ring 225 towards the inside along the axial direction (clutching on off direction). The shift spring 228 is stretchably provided between the bent portion 226b of the retainer 226 and the axially inward wall of the clutch ring 225 thereby urging the clutch ring 225 axially outwardly (clutching on direction). The return spring 227 has stronger expanding force than that of the shift spring 228. The axially outer end of the driving gear 202 projects from the outer end of the axle shaft 201, and a bearing 229 is disposed between the inner periphery of the outer end of the axle shaft 201 and the projection 223 of the casing. In Figure 8A, the upper half above the centre line shows clutched-off (two wheel drive) mode, whilst the lower half shows clutched-on (four wheel drive) mode. positional relationships between a projection 202a on the outer circumference of the driving gear and a projection 209d on the inner circumference of the cam ring 209 are shown in free (clutched-off) mode in Figures 10A, 10B and in locked up (clutched-on) mode in Figures 11A and 11B. Furthermore the rolling body 204a may have a bearing-like construction as shown in Figure 8B, but it is not limited thereto.

In the above construction, the operation for initiating switching over from the clutched-off mode (Figure 9A) shown in the upper half of Figure 8A to the clutched-on mode (Figure 9B) shown in the lower half of Figure 8A will be described hereinbelow.

First, when driving force form the engine is transmitted to the axle shaft 201, the driving gear 202 and the moving body 204 start their integral rotation. In the clutched-off mode, the rolling bodies 204a of the moving body 204 are simultaneously fitted in and engaged with the grooved cam portion 207a of the cam 208 and the first cam portion 209a of the cam ring 209. When the moving body 204 commences to be rotated by rotation of the axle shaft 201, the rolling body 204a is displaced axially outwardly along the respective cam surfaces of the cam portions 207a and 209a by means of the axially outward thrust force which is generated by the rolling body 204a rolling on the respective cam surfaces. The rolling body 204a gets over the grooved cam portions 207a and 209a, and runs on the second cam portion 209b of the cam ring. The rolling body is displaced axially outwardly along the second cam portion and finally abuts on the stopper 209c to cease displacement in the axial direction. The relative rotation between the cam ring 209 and the moving body 204 in this case arises from friction caused by pressing of the cam ring 209 to the contact surface with the cam 208 as a result of receiving the reaction force of the return spring 227 through the moving body 204. When the return spring 227 is compressed due to axially outward shift of the moving body 204, the clutch ring 225 is simultaneously displaced outwardly in the axial direction by intermediacy of the shift spring 228 so that the splines 225b completely mesh with the spline 203a (the lower half of Figure 8, and Figure 9B). Thus, complete clutched-on mode is attained whereupon the projection 202a on the outside circumference of the driving gear engages with the projection 209d on the inside circumference of the cam ring 209 to rotate directly the cam ring 209, thereby transmitting rotational torque.

Next, such case where four wheel drive mode is switched over to two wheel drive mode will be described hereinbelow.

After transmission of the driving force to the axle shaft 201 is shut off the car is reversed slightly, whereby the rolling body 204a of the moving body 204 is shifted away from the stopper 209c by means of the expanding force of the return spring 227, and the rolling body is displaced inwardly in the axial direction along the cam portion 209b, finally the rolling body 204a drops into the cam portion 207a of the cam 208 and the cam portion 209a of the cam ring 209. Thus, the clutched-off mode is realised. In the course of axially inward displacement of the first cam 204, the splines 225b of the clutch ring 225 are released from meshing with the spline 203a to return to the clutched-off position. Since the spline 222 of the casing is used for only carrying slidably the clutch ring 225, there is no need for constructing such spline with a material having high strength and heavy weight such as steel and the like. Hence weight-saving can be attained by utilising aluminum alloy or the like.

Figure 12 is a schematic sectional view showing a modification of the second embodiment according to the present invention wherein like reference characters designate like or corresponding parts to those in Figure 8 and the overlapping description therefor will be omitted. The present modification differs from the second embodiment in that an arm 226a of the retainer 226 axially passes through clutch ring 225 and the extreme end of it forms a bent stopper 232. Additionally a radially outward projection 226b is formed at the axially inner end of the retainer.

Figure 13 illustrates a still further modification of the second embodiment, according to the present invention, and which differs in that a cam-retainer member 233 is integrally formed with a retainer and a first cam, in that the clutch ring 225 is constructed such that it is slidably engaged with the driving gear 202 to be clutched on-off with a spline 222 of the casing, and in that the return spring 227 is disposed between the extreme end of the driving gear 202 and a stopper 232 and is stretchably provided in series with a shift spring 228 disposed between the inner wall of the cam-retainer member 233 and the clutch ring 225. According to the construction as described above, since urging force is always applied to the driving gear by means of the return spring 227 in the direction of the illustrated arrow, no snap ring is required for preventing falling-off of bearing 229.

Figure 14 illustrates a third modification of the second embodiment wherein the engagement of a cam-retainer member 233 with a clutch ring 225 is the same as in said second modification, but the present modification differs therefrom in that a return spring 227 disposed between an inner end of a single spline of a driving gear 202 and the cam-retainer member 233 is stretchably provided in parallel with a shift spring 228 disposed between clutch ring 225 and the cam-retainer member 233.

In the present modification, snap rings for preventing falling-off of bearing 229 may also be omitted.

In brief, the above-mentioned second embodiment and modifications are constructed such that the engaging portion of the moving body which shifts along the contour of the cam is made to generate a rolling resistance for engaging and disengaging the clutch ring whereby resistance at the cam brake surface 207b may be reduced so that the durability thereof is elevated and clutching operation becomes positive.

Next, the third embodiment of the present invention will be described hereinbelow.

In the third embodiment of the present invention shown in Figures 15 through 19A, 19B, 19C, inclusive, a hub clutch comprises a driving gear 302, a first cam 304, a second cam 308, a cam ring 309, a casing 324, a clutch ring 325, a retainer 326, an overhanging portion 304b, a return spring 327, and a shift spring 328. In the hub clutch, the driving gear 302 is fixedly splined to the radially outer surface of an axle shaft 301 at the axially outer end thereof and said driving gear has a first spline 303a and a second spline 303b for locking the clutch at the radially exterior surface thereof. The first cam 304 is in splined engagement with the second spline 303b such as to be axially movable and forms V-shaped projecting cam portions 304a at its axially inward edge. Rotation of the second cam 308 is prevented by means of a stationary system (comprising a spindle 305, a lock nut, not shown, and the like). Said second cam has a plurality of V-grooved cam portions 307a provided on its axially outward edge into which a thick portion on the circumference of each projection 304a of the first cam may fit and has also a friction surface 307b on the radially inner face thereof. The cam ring 309 has a V-grooved first cam portion 309a, into the axially outward end of which the thick portion on the radially inner side of a cam projection 304a may fit and also has a sequential pair comprising a second cam portion 309b and stopper 309c positioned to each side of the first cam portion 309a. Said cam ring further forms a brake surface generating required damping force due to sliding of the axially inward outer circumferential surface thereof against the friction surface 307b of the radially inner face of the second cam 308. The inside circumferential surface of the casing 324 is secured to a wheel hub (not shown) by a bolt and possesses a spline 322. Furthermore said casing is provided with a projection 323 from the radially central portion of the inner surface of the outer end wall of the casing. The clutch ring 325 has splines 325a on its radially outer surface engaged movably with a spline 322 of the casing 324 along the axial direction thereof, as well as a spline 325b engaging reversibly with the first spline 303a of the driving gear in clutching on-off action. The retainer 326 has a retainer arm 326a the rotation of which is suppressed by means of the spline 322 and also has a radially inwardly bent portion 326b at the axially inward end of the retainer arm 326a. The over hanging portion 304b is integral with and projects axially outwardly from the radially inner portion of the first cam 304 and the inside circumferential surface of the bent portion 326b of the retainer is carried by the outside circumferential surface of portion 304b. (It is preferable to design the over hanging portion 304b such that it projects axially outwardly beyond the outer surface of the bent portion 326b, and such that the outer end surface thereof engages with the return spring.) The return spring 327 is stretchably provided between a stepped portion 303c on the radially exterior surface of the driving gear 302 and said outer end surface of the over hanging portion (including the outer end surface of the retainer bent portion 326b) through a spring carrier. The shift spring 328 is stretchably provided between the bent portion 326b of the retainer and the inside wall of the clutch ring 325 along the axial direction thereof thereby urging the clutch ring 325 axially outwardly (clutching-off direction). The return spring 327 has stronger expanding force than that of the shift spring 328. The axially outer end of the driving gear 302 projects from the outer end of the axle shaft 301, and a bearing 329 is disposed between the radially inner surface of the outer end of the driving gear 302 and the projection 323 of the casing. The radially inner portion of the bearing 329 is constrained by a stepped portion 323a of the projection 323, whilst the radially outer portion of bearing 329 is constrained by a stepped portion of the radially inner surface of the driving gear 302. Reference numeral 302a designates a projection on the outside circumference of the driving gear and which is located so as to be engageable with a projection 309d on the radially inner surface of the cam ring. Either the projection 302a may be a separate body from the driving gear 302 such as in Figure 15 (unlabelled), wherein the projection is splined to the driving gear and secured by means of a snap ring, or the projection may be integrally formed as shown in Figures 17A, 17B and Figures 18A, 18B.

In Figures 19A, 19B and 19C, damping between the second cam 308 and the cam ring 309 is not effected by means of a conical shaped friction surface, but by clutch disks 350 and 351. While the second cam 308 is similar to that of Figure 15 in that it is provided with the grooved cam portion 307a and a pawl portion, the second cam differs therefrom in that a notch 308a for fitting lugs 351a, which lugs are provided on the circumference of the clutch disk 351, is defined in place of the friction surface 307b. Although the cam ring 309 is the same as that of Figure 15 in that it is provided with the first cam portion 309a, the second cam portion 309b and the stopper 309c, the cam ring differs in that a notch 309f is defined on a cylindrical projection 309e, for accommodating a lug portion 350a on the radially inner side of the clutch disk 350. The projection 309e fits through a central aperture of each clutch disk. Rotation of each clutch disk 351 is prevented by the first cam portion 309a, whilst at the same time each disk 351 is allowed to shift along the axial direction within a prescribed range. One clutch disk 350 is placed between the respective clutch disks 351 such that the lug portions 350a of the disk 350 lock into the notches 309f of the cam ring causing the clutch disk 350 to rotate integrally in accordance with rotational shift of the cam ring 309.

In the above construction, the operation for switching over from the clutched-off mode shown in Figures 16A and 19A to the clutched-on mode shown in Figures 16B and 19C will be described hereinbelow.

First, when driving force from the engine is transmitted to the axle shaft 301, the driving gear 302 and the first cam 304 start their integral rotation. In the clutched-off mode, the cam portions 304a of the first cam 304 are simultaneously fitted in and engaged with the grooved cam portion 307a of the second cam 308 and the first cam portion 309a of the cam ring 309. When the first cam 304 starts to be rotated by rotation of the axle shaft 301, the cam portion 304a is displaced axially outwardly along the respective cam surfaces of the cam portions 307a and 309a in response to the axially outward thrust force generated at the respective cam surfaces. The cam portion 304a gets over the grooved cam portions 307a and 309a, and runs on the second cam portion 309b of the cam ring. Then, the cam portion 4a is further displaced axially outwardly along the second cam portion eventually abutting the stopper 309c to cease displacement in the axial direction. When the return spring 327 is compressed due to shift of the first cam 304 in the axial direction, the clutch ring 325 is displaced axially outwardly via intermediacy of the shift spring 328 so that the splines 325a completely mesh with the spline 303a (Figure 16B and Figure 19C). Thus, complete clutched-on mode is attained whereupon the projections 302a on the radially outer surface of the driving gear engages with the projection 309d on the radially inner surface of the cam ring 309 to rotate directly the cam ring 309, transmitting rotational torque.

Next, the case where four wheel drive mode is transferred to two wheel drive mode will be described hereinbelow.

After transmission of the driving force to the axle shaft 301 is shut off, the vehicle is reversed slightly, whereby the cam portion 304a of the first cam 304 is shifted away from the stopper 309c by means of the expanding force of the return spring 327, and the cam portion is displaced axially inwardly along the cam portion 309b, finally the cam portion 304a drops into the cam portion 307a of the second cam 308 and the cam portion 309a of the cam ring 309. Thus, the clutched-off mode is realised. In the course of axially inward displacement of the first cam 304, the splines 325b of the clutch ring 325 are released from meshing with the spline 303a. Since the spline 322 of the casing is used for only carrying slidably the clutch ring 325, there is no need for constructing such spline with material having high strength and heavy weight such as steel and the like. Hence weight-saving can be attained by utilising aluminum alloy or the like.

In the course of transferring from the clutched off mode, illustrated in Figure 19A, the clutched on-mode, illustrated in Figure 19C, when the ratcheting state shown in Figure 19B appears, the return spring 327 will be in compressed state. The resulting reaction force will be applied to the over hanging portion 304b, but no reaction force will be applied to the retainer 326. In such circumstances, only the reaction force of the shift spring 328 will be applied to a contacting part (sliding part) between the axially outer surface of the first cam and the axially inner surface of the bent portion 326b of the retainer through the retainer 326. For this reason, even if the contact surface between the retainer 326 and the first cam 304 slides as a result of relative rotation therebetween during ratcheting, there is no risk of generating excessive friction. Accordingly, there is less risk of rapid decrease in durability of the sliding section.

In the brake section having the construction shown in Figures 19A, 19B, 19C and 20, when the driving shaft commences rotation and the first cam 304 urges the cam ring 309 axially inwardly, the respective clutch disks 350 and 351 are forcibly contacted with each other between the cam ring 309 and the second cam 308 thereby braking the cam ring 309.

The protruded projection may be exchanged for the grooved projection.

In brief, the above third embodiment is constructed such that the trust of the return spring is never applied to the sliding section, so that wear in the sliding section between a member on the housing side and a member on the driving shaft side during ratcheting can be reduced and thus the durability can be improved.

**Claim**

A hub clutch for selectively transmitting torque between an axle shaft (1) extending in an axial direction and a wheel hub (20), said hub clutch comprising: a cylindrical casing (24) secured to the wheel hub (20) and having a spline (22) extending along an inner surface thereof; a driving gear (2) fixed to an end of the axial shaft (1) within said casing, said driving gear having splines (3a, 3b) extending along an outer surface thereof; a first cam means (4) in splined engagement with said driving gear (2) and movable therealong in said axial direction, said first cam means (4) having cam portions projecting toward an inner side of the hub clutch; a second non-rotatable cam (8) adjacent said first cam and cooperating therewith, said second cam (8) having a second cam grooved portion (7a) engaging said cam portions of said first cam means (4); a rotatable cam ring (9) in a frictional braking relationship with said second cam and engaging said cam portions of said first cam means; a clutch ring (25); characterised in that said clutch ring (25) is in splined engagement with said spline (22) on said inner surface of said casing (24) and movable in said axial direction between a first clutched position adjacent an outer side of the hub clutch at which the clutch ring operatively connects the splines of said driving gear and the spline of said casing for transmitting torque between the axle shaft to which said driving gear is fixed and the wheel hub to which said casing is fixed and a second unclutched position at which the clutch ring (25) does not transmit torque between the axle shaft (1) and the wheel hub (20); in that a shift spring (29) is provided for urging said clutch ring (25) toward said clutched position in said axial direction; in that a return spring (27) is provided for urging said clutch ring (25) toward said unclutched position; and in that the projecting cam portions of said first cam means (4) extend in said second cam grooved portion (7a) and in said cam ring grooved portion when said cam ring is in said unclutched position and, when the axle shaft is rotated, said projecting cam portions (4a) of said first cam means (4) are urged in said axial direction toward said outer side of the hub clutch by said respective grooved portions (7a) whereupon said projecting cam portions follow said second cam portions of said second cam and said first cam means is urged thereby further toward said outer side of the hub clutch for urging said clutch ring (25) toward said clutch position which it attains under the influence of said shift spring (28) and further displacement of said first cam means (4) and said clutch ring (25) toward the outer side of the hub clutch is terminated.

**Patentanspruch**

Nabenkupplung zum wahlweisen übertragen von Drehmoment zwischen einer sich in einer Achsrichtung erstreckenden Achswelle (1) und einer Radnabe (2), enthaltend: ein zylindrisches Gehäuse (24), das an der Radnabe (20) befestigt ist und einen Keil (22) aufweist, der sich längs einer Innenfläche desselben erstreckt; ein Antriebszahnrad (2), das an einem Ende der Achswelle (1) innerhalb des Gehäuses befestigt ist und das Keile (3a, 3b) aufweist, die sich längs einer Außenfläche desselben erstrecken; eine erste Nockeneinrichtung (4), die in verkeiltem Eingriff mit dem Antriebszahnrad (2) ist und längs desselben in der genannten Achsrichtung beweglich ist, welche erste Nockeneinrichtung (4) Nockenabschnitte aufweist, die gegen eine Innenseite der Nabenkupplung vorstehen; einen zweiten, nicht drehbaren Nocken (8) benachbart dem ersten Nocken, der mit diesem zusammenwirkt und der einen genuteten Abschnitt (7a) aufweist, der in die Nockenabschnitte der ersten Nockeneinrichtung (4) eingreift; einen drehbaren Nockenring (9) in einem Reibungsbremsverhältnis mit dem zweiten Nocken und in Eingriff mit den Nockenabschnitten der ersten Nockeneinrichtung; einen Kupplungsring (25), dadurch gekennzeichnet, daß der Kupplungsring (5) in Keileingriff mit dem Keil (22) an der Innenfläche des Gehäuses (24) ist und in der genannten Achsrichtung zwischen einer ersten gekoppelten Stellung benachbart einer Außenseite der Nabenkupplung, bei der der Kupplungsring die Keile des Antriebszahnrades und den Keil des Gehäuses wirkungsmäßig verbindet, um Drehmoment zwischen der Achswelle, an der das Antriebszahnrad befestigt ist, und der Radnabe, an der das Gehäuse befestigt ist, zu übertragen, und einer zweiten, entkuppelten Stellung beweglich ist, in der der Kupplungsring (25) kein Drehmoment zwischen der Achswelle (1) und der Radnabe (20) überträgt; daß eine Schiebefeder (29) vorgesehen ist, um den Kupplungsring (25) in der genannten Achsrichtung in Richtung auf die gekuppelte Stellung zu drücken; daß eine Rückführfeder (27) vorgesehen ist, um den Kupplungsring (25) in Richtung auf die entkuppelte Stellung zu drücken; und daß die vorstehenden Nockenabschnitte der ersten Nockeneinrichtung (4) sich in den genuteten Abschnitt (7a) des zweiten Nocken und in den genuteten Abschnitt des Nockenrings erstrecken, wenn der Nockenring sich in der entkuppelten Stellung befindet, und, wenn die Achswelle gedreht wird, die vorstehenden Nockenabschnitte (4a) der ersten Nockeneinrichtung (4) in der genannten axialen Richtung gegen die Außenseite der Nabenkupplung durch die entsprechenden genuteten Abschnitte (7a) gedrückt werden, woraufhin die vorstehenden Nockenabschnitte den zweiten Nockenabschnitten des zweiten Nocken folgen und die erste Nockeneinrichtung dadurch weiter gegen die genannte Außenseite der Nabenkupplung gedrückt wird, um den Kupplungsring (25) in Richtung auf die gekuppelte Stellung zu drücken, die er unter dem Einfluß der genannten Schiebefeder (28) erreicht und eine weitere Verstellung der ersten Nockeneinrichtung (4) und des Kupplungsrings (25) gegen die Außenseite der Nabenkupplung beendet ist.

**Revendication**

Embrayage de moyeu destiné à transmettre sélectivement un couple entre un arbre axial (1) disposé en direction axiale et un moyeu (20) de roue, l'embrayage de moyeu comprenant un carter cylindrique (24) fixé au moyeu (20) de roue et ayant une partie cannelée (22) disposée le long d'une surface interne du carter, un pignon menant (2) fixé à une extrémité de l'arbre axial (1) à l'intérieur du carter, le pignon menant ayant des cannelures (3a, 3b) disposées le long d'une surface externe, une première came (4) coopérant avec le pignon menant (2) par l'intermédiaire de cannelures et mobile le long de ce pignon dans la direction axiale, la première came (4) ayant des parties de came qui dépassent vers une face interne de l'embrayage de moyeu, une seconde came non rotative (8) adjacente à la première came et coopérant avec celle-ci, la seconde came (8) ayant une seconde partie (7a) à gorge coopérant avec les parties de came de la première came (4), une bague rotative de came (9), coopérant par freinage par frottement avec la seconde came et en prise avec les parties de came de la première came, et une bague d'embrayage (25), caractérisé en ce que la bague d'embrayage (25) coopère par des cannelures avec la partie cannelée (22) de la surface interne du carter (24) et est mobile dans la direction axiale entre une première partie embrayée adjacente à la face externe de l'embrayage de moyeu, dans laquelle la bague d'embrayage raccorde les cannelures du pignon menant et la partie cannelée du carter afin qu'un couple soit transféré entre l'arbre axial auquel est fixé le pignon menant et le moyeu de roue auquel est fixé le carter, et une seconde position débrayée dans laquelle la bague d'embrayage (25) ne transmet pas le couple entre l'arbre axial (1) et le moyeu (20) de roue, en ce qu'un ressort de décalage (29) est disposé afin qu'il repousse la bague d'embrayage (25) vers la position embrayée, en direction axiale, en ce qu'un ressort de rappel (27) est destiné à rappeler la bague d'embrayage (25) vers la position débrayée, et en ce que les parties en saillie de la première came (4) dépassent dans la partie à gorge (7a) de la seconde came et dans la partie à gorge de la bague de came lorsque la bague de came est en position débrayée et, lorsque l'arbre axial tourne, les parties en saillie (4a) de la première came (4) sont repoussées en direction axiale vers la face externe de l'embrayage de moyeu par les parties respectives (7a) à gorge, et les parties en saillie de came suivent les secondes parties de came de la seconde came et la première came est repoussée de cette manière plus loin vers la face externe de l'embrayage de moyeu de manière que la bague d'embrayage (25) soit repoussée vers la position d'embrayage qui est atteinte sous l'action du ressort de décalage (28) et le déplacement supplémentaire de la première came (4) et de la bague d'embrayage (25) vers la face externe de l'embrayage de moyeau est terminé.

EP 0 192 341 B1

*Fig. I*

1

## Fig.2(A)

## Fig.2(B)

Fig. 3 (B)

Fig. 4 (B)

Fig. 3 (A)

Fig. 4 (A)

Fig. 5

Fig. 6

Fig. 7

4

# Fig. 8 (A)

# Fig. 8 (B)

*Fig.9(A)*

*Fig.9(B)*

Fig. 10 (A)

Fig. 10 (B)

Fig. 11 (A)

Fig. 11 (B)

EP 0 192 341 B1

## Fig. 12

## Fig. 13

## Fig. 14

## Fig. 15

## Fig.16(A)

## Fig.16(B)

10

## Fig.17(A)

320  308  309  304a  324

302

309d  304

301

302a  304b

## Fig.17(B)

301  309

302a

309d  302

309d

## Fig.18(A)

309  304a

308

302

309d

302a  304

## Fig.18 (B)

309

302a  302

309d  301

Fig. 19 (A)

Fig. 19 (B)

Fig. 19 (C)

Fig.20